# FASCICULE DE BREVET EUROPEEN

(11) **EP 0 293 331 B1**
(45) Date de publication et mention de la délivrance du brevet: **31.03.1993**
(21) Numéro de dépôt: 88810334.8
(22) Date de dépôt: 25.05.1988
(51) Int. Cl.: B29C 47/28, B29C 47/22

(54) **Outillage d'extrusion pour le dépôt d'une gaine de matière plastique sur un fil**
Strangpresseinrichtung zum Aufbringen einer Kunststoffhülle auf einen Draht
Extrusion equipment for applying a plastic sheath to a wire

(30) Priorité: 29.05.1987 CH 2065/87
(43) Date de publication de la demande: 30.11.1988
(73) Titulaire: Nokia-Maillefer S.A., 1024 Ecublens Canton de Vaud (CH)
(72) Inventeur: Weber, Kurt, CH-1028 Préverenges (CH)
(74) Mandataire: Fischer, Franz Josef

(56) Documents cités:
- BE-A- 398 942
- DD-A- 241 288
- FR-A- 1 115 624
- US-A- 2 732 588
- US-A- 2 859 476
- US-A- 3 222 721
- US-A- 3 807 916
- PATENT ABSTRACTS OF JAPAN, vol. 7, no. 197 (M-239)[1342], 27 août 1983; & JP-A-58 96 535 (SUMITOMO DENKI KOGYO K.K.) 08-06-1983

## Description

La production des fils métalliques munis d'une gaine isolante en matière plastique exige la mise en route d'une ligne de production qui comporte plusieurs éléments. Cette opération de mise en route est longue, difficile et délicate. Une des difficultés que l'on rencontre consiste à ajuster l'outillage d'extrusion de manière que la position de la filière par rapport au guide-fil soit correcte. Dans le cas où l'outillage comporte plusieurs filières, c'est la position globale de l'ensemble des filières qui doit être ajustée. La disposition la plus fréquente à l'heure actuelle, pour une tête d'extrusion, est la disposition horizontale, et la matière à tendance, dans ce cas, à s'amasser dans la partie inférieure de l'ouverture de sortie, sous l'effet de son poids. Il en résulte un risque de défaut de centrage de la gaine par rapport au fil. Pour compenser cette tendance, on ajuste un certain décentrage entre la filière ou les filières et le guide-fil. Cependant, l'ajustage de ce décentrage est une opération délicate et fastidieuse, car la valeur du décentrage apte à donner à la gaine une position finale coaxiale au fil dépend de nombreux paramètres.

Le brevet US-3 222 721, publié en 1965, comporte l'exposé de ce problème, et des moyens destinés à y remédier. Toutefois, les moyens proposés ne satisfont pas dans toute la mesure possible aux exigences de la pratique.

En analysant cette situation, on s'est aperçu que les opérations d'ajustage pourraient être considérablement simplifiées et activées, à condition que l'outillage soit conçu de manière à permettre d'amener l'ensemble de filières dans une position rigoureusement coaxiale au guide-fil par une opération susceptible d'être effectuée rapidement et de façon répétitive, sans tâtonnement . Ainsi, il existait un besoin d'outillage permettant une telle opération.

La présente invention a pour but de répondre à ce besoin. Elle a pour objet un outillage d'extrusion pour la formation en continu d'une gaine de matière plastique sur un fil, comprenant un support, un guide-fil fixé dans le support, et un ensemble de filières destiné à conduire et calibrer la matière plastique et des moyens de centrage ajustables dans le sens radial pour solidariser l'ensemble de filières avec le support, caractérisé en ce que l'ensemble de filières est solidaire d'une bague porte-filières définissant un axe de filières, et en ce que les dits moyens de centrage comportent d'une part un dispositif de fixation à ajustage progressif permettant d'ajuster un décalage voulu entre l'axe du support et l'axe de filières et d'autre part un dispositif de fixation à centrage forcé permettant de placer la bague dans une position coaxiale au support en une opération, les deux dits dispositifs de fixation reliant séparément la bague au support.

On va décrire ci-après, à titre d'exemple, plusieurs formes d'exécution de l'objet de l'invention, en se référant au dessin, dont:
la fig. 1 est une vue en coupe axiale d'un outillage d'extrusion selon la première forme d'exécution,
la fig. 2 est une vue en coupe par des plans perpendiculaires à l'axe de l'outillage selon la ligne II-II de la fig. 1, et
la fig. 3 est une vue analogue à celle de la fig. 1 montrant une deuxième forme d'exécution de l'objet de l'invention.

La première forme d'exécution se rapporte à un outillage d'extrusion qui comporte un seul raccord d'alimentation et permet de déposer sur un fil métallique, par exemple un conducteur électrique, une gaine isolante formée d'une couche de matière plastique extrudée.

L'outillage comporte un support 1 qui est une pièce de forme tubulaire susceptible d'être fixée dans une orientation transversale, en regard de la sortie d'une extrudeuse, et dans l'axe de dévidage d'un fil métallique, se déroulant par exemple d'une bobine. Un guide-fil 2 est engagé à l'intérieur du support 1 et fixé par cinq vis 3 traversant une bride 4 située à l'arrière du guide-fil 2. Ce dernier présente une surface extérieure cylindrique ajustée dans un alésage du support 1, et dans cette surface extérieure est ménagé un réseau de conduits 5 qui reçoivent la matière plastique par un conduit radial 6 traversant le support 1 depuis le fond d'un logement latéral 7. Ce logement est taraudé de façon à recevoir un raccord (non représenté) connecté à la sortie de l'extrudeuse. Le guide-fil 2 présente selon son axe un passage central 8 profilé de manière à guider le fil à enrober.

A l'avant de l'outillage d'extrusion, c.à.d. à son extrémité côté aval, est placée une bague porte-filière 11 dont l'extrémité arrière ou amont présente un rebord tubulaire 12 avec une collerette 12a. Le rebord 12 présente une surface interne cylindrique qui s'engage avec jeu sur une surface cylindrique externe 13 formant une portée à l'extrémité aval du support 1. Le rebord tubulaire 12 est encore limité extérieurement, du côté amont, par une portée cylindrique 14 coaxiale à la bague 11 et dont le diamètre est exactement égal à celui d'une portée correspondante 15 usinée à l'extrémité aval du support 1.

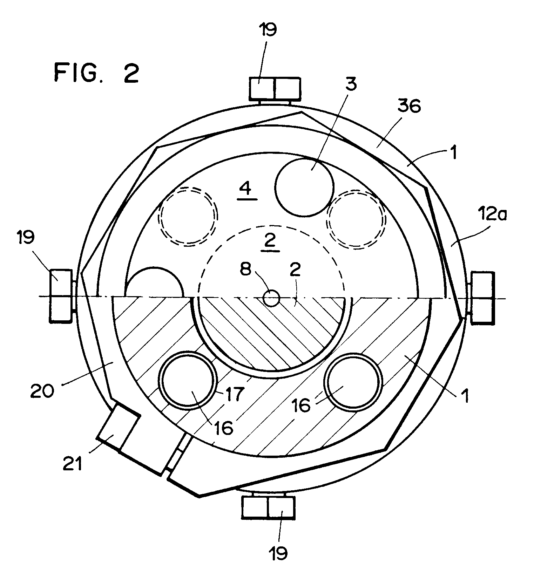

Ces éléments permettent la fixation de la bague 11 au support 1, soit dans une position rigoureusement coaxiale au support, soit avec un décentrage contrôlé. Les moyens de fixation utilisés pour cela comprennent tout d'abord quatre vis 16 qui sont disposées axialement dans le fond de quatre trous 17 ménagés dans le support 1. Les axes de ces trous sont décalés angulairement par rapport à ceux des taraudages prévus pour recevoir les vis 3. Les vis 16 pressent axialement un épaulement 18 de la bague 11 contre la face axiale aval plane du support 1, les diamètres des trous étant suffisants pour permettre des variations de positions dans le sens latéral. Des seconds moyens d'ajustage sont encore prévus entre la bague 11 et le support 1. Ils comportent quatre vis 19 engagées radialement dans des taraudages qui sont ménagés dans la collerette 12a. Les extrémités de ces vis 19 viennent s'appuyer sur la portée 13 et comme les trous d'engagement des vis 19 sont orientés à 90° l'un de l'autre dans la bague 11, ces vis permettent d'ajuster le décentrage des deux constituants de l'outillage l'un par rapport à l'autre à volonté. Finalement, un collier de serrage 20 susceptible d'être bloqué ou libéré grâce à une vis 21 (Fig. 2) reliant les extrémités de ce collier permet, lorsque les vis 19 sont desserrées, de placer les deux pièces 11 et 1 dans des positions rigoureusement coaxiales l'une à l'autre. En effet, le collier de serrage 20 présente une surface interne cylindrique de même diamètre que les portées 14 et 15, de sorte que, lorsque la vis 21 est serrée, ces deux portées sont amenées rigoureusement dans le prolongement l'une de l'autre.

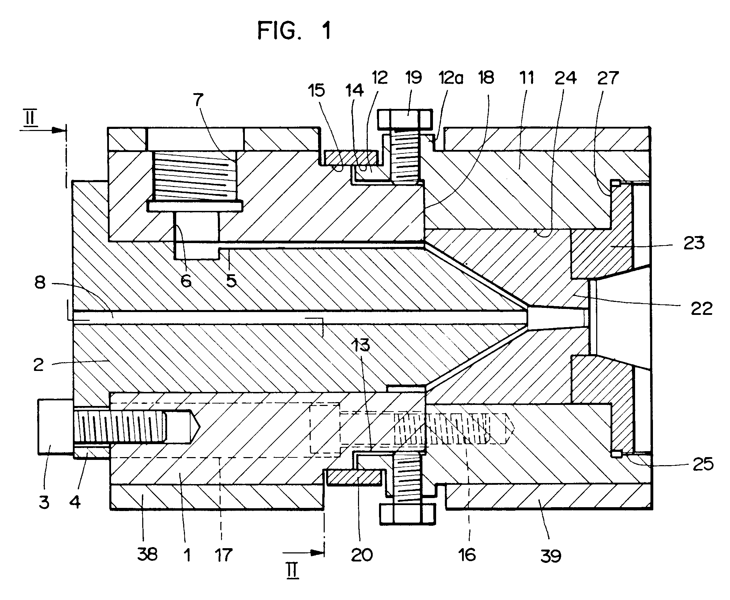

Le support 1 peut être équipé de différentes bagues porte-filières 11. La bague 11 représentée à la fig. 1 porte un ensemble de filières qui comprend une filière 22 de forme classique, dont le cône d'entrée s'étend en regard de la surface tronconique aval du guide-fil 2, et un écrou extérieur 23 qui s'ajuste à l'intérieur d'un alésage 24 de la bague 11.

L'agencement de filière décrit est tenu en place par l'écrou 23 qui se visse dans un taraudage 25 ménagé sur le flanc interne d'un logement cylindrique 27 de la bague 11. Dans un agencement de ce genre, il peut être nécessaire d'ajuster un décentrage contrôlé entre la filière 22 et le guide-fil 2 et lors de cet ajustage il peut être utile de controler un retour forcé à une position rigoureusement coaxiale des deux pièces. Ceci peut être obtenu en une opération grâce au collier de serrage 20.

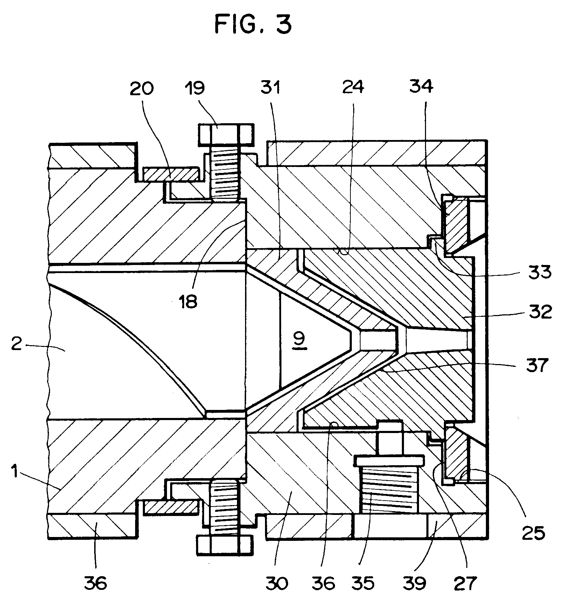

Toutefois, cet agencement de filières n'est pas le seul qui puisse être utilisé avec la bague 11 telle que décrite. Ainsi la fig. 3 montre un autre agencement de filières tenu en place dans l'outillage de la première forme d'exécution. On reconnaît à la fig. 3 le support 1 et une bague 30 qui est tenue en place par les moyens de fixation 19 et 20 grâce à des moyens de liaison analogues à ceux de la bague 11, formés à son extrémité amont. L'alésage interne 24 de la bague 11 guide une filière amont 31 dont la surface tronconique amont s'étend en regard du cône aval 9 du guide-fil 2. Une filière aval 32 qui présente une collerette périphérique 33 est également supportée par la bague 30. Celle-ci comporte le logement 27 avec le taraudage 25 dans lequel se visse un écrou 34 accroché à la collerette 33. Un passage latéral taraudé 35 ménagé radialement dans la bague 30, peut être raccordé à un conduit provenant par exemple d'une extrudeuse auxiliaire. Il permet d'alimenter un réseau de conduits secondaires 36 ménagé dans la surface extérieure de la filière 32. L'ensemble de filières 31, 32 est maintenu en place par l'écrou 34 s'appuyant sur la collerette 33 de la filière 32. La matière plastique provenant de l'extrudeuse auxiliaire par le passage 35 est conduite par le réseau de creusures 34 prévu dans la surface extérieure de la filière 32 vers une chambre tronconique mince 37 qui est ménagée entre les pièces 32 et 31, de sorte qu'une pellicule extérieure se dépose sur l'enrobage formé sur le fil à la sortie du guide-fil 2. En effet, le passage 7 du support est raccordé également à l'extrudeuse principale de sorte que l'espace entre le cône 9 du guide-fil 2 et l'espace 37 sont alimentés séparément. Ainsi la gaine est formée d'une couche principale enrobant directement le fil, et d'une pellicule de matière de constitution différente, par exemple de matière colorée, s'étendant à la surface de la couche principale.

Des manteaux chauffants 38 et 39 capables de maintenir l'outillage à la température voulue équipent aussi bien le support 1 que la bague 11 ou la bague 30. En variante, la bague porte-filières, représentée aux fig. 1 et 3 en deux formes d'exécution désignées 11 et 30, de même que les filières des différents ensembles prévus, pourraient être dimensionnés et conformés de manière que tous les ensembles de filières s'adaptent à une même bague capable de se fixer de manière ajustable sur le support 1. Ce dernier constitue le bâti de la tête d'extrusion. Dans le cas d'un ensemble de filières avec raccordement auxiliaire à une alimentation en matière plastique, ce raccordement devra comporter la souplesse nécessaire pour permettre les ajustages nécessaires de la bague porte-filières par rapport au support. Grâce aux vis 16, la bague porte-filières est pressée par sa face plane amont contre la surface plane aval 18 du support 1, de manière à empêcher toute fuite de matière plastique entre ces deux surfaces, et cela quelle que soit l'ajustage latéral de la bague par rapport au support.

## Revendications

1. Outillage d'extrusion pour la formation en continu d'une gaine de matière plastique sur un fil, comprenant un support (1), un guide-fil (2) fixé dans le support (1) selon un axe du support (1), un ensemble de filière (22) destiné à conduire et calibrer la matière plastique et des moyens de centrage (11, 19, 20) ajustables dans le sens radial pour solidariser l'ensemble de filières (22) avec le support (1), caractérisé en ce que l'ensemble de filières (22) est solidaire d'une bague porte-filières (11) définissant un axe de filières, et en ce que les dits moyens de centrage comportent d'une part un dispositif de fixation (19) à ajustage progressif permettant d'ajuster un décalage voulu entre l'axe du support (1) et l'axe de filières et d'autre part un dispositif de fixation (20) à centrage forcé permettant de placer la bague (11) dans une position coaxiale au support (1) en une opération, les deux dits dispositifs de fixation (19, 20) reliant séparément la bague (11) au support (1).

2. Outillage selon la revendication 1, caractérisé en ce que ledit dispositif à ajustage progressif comprend un jeu de vis (19) engagées radialement dans des taraudages du support (1) ou de la bague (11) et s'appuyant sur une première portée cylindrique de la bague ou du support (13), et en ce que le dispositif de fixation à centrage forcé comprend un collier cylindrique (20) ouvrable et fermable, capable de s'appuyer simultanément sur deux secondes portées cylindriques (14, 15) appartenant respectivement à la bague porte-filières (11) et au support (1).

3. Outillage selon la revendication 2, caractérisé en ce que le collier cylindrique (20) présente une surface intérieure cylindrique et en ce que les deux secondes portées cylindriques (14, 15) ont le même diamètre, et sont des portées extérieures.

4. Outillage selon la revendication 3, caractérisé en ce que la première portée (13) a un diamètre inférieur à celui des secondes portées (14, 15) et s'engage à l'intérieur d'un prolongement tubulaire (12) de la bague (11) ou du support (1), ce prolongement (12) étant pourvu des dits taraudages.

5. Outillage selon la revendication 1, caractérisé par des moyens de maintien (16) de la bague (11) par rapport au support (1), ces moyens comportant un jeu de vis (16) disposées parallèlement aux dits axes, et pressant l'une contre l'autre deux surfaces annulaires planes et perpendiculaires à leur axe, de la bague porte-filières (11) et du support (1).

6. Outillage selon la revendication 1, caractérisé en ce que ledit ensemble de filières (22) est rendu solidaire de la dite bague (11;30) par des moyens de retenue (24, 25, 27, 34) capables de retenir sélectivement un quelconque des ensembles de filières faisant partie d'un jeu d'ensembles (22; 31, 32) de constitutions différentes.

7. Outillage selon la revendication 1, caractérisé en ce qu'il comporte au moins deux orifices d'alimentation (7, 35) en matière plastique permettant de former une gaine présentant des zones distinctes formées de matières différentes, au moins un orifice étant ménagé dans le support (1) et au moins un autre étant ménagé dans la bague porte-filières (30).

## Claims

1. Extrusion equipment for continuously forming a sheath of plastic material on a wire, comprising a support (1), a wire guide (2) fixed in the support (1) along one axis of the support (1), an assembly of dies (22) intended to convey and calibrate the plastic material and centering means (11, 19, 20) adjustable in the radial direction for securing the assembly of dies (22) to the support (1), characterized in that the assembly of dies (22) is secured to a die-base ring (11) defining an axis of dies, and in that the said centering means include, on the one hand, a progressively adjustable fixing device (19) permitting adjustment of a desired offsetting between the axis of the support (1) and the axis of the dies, and, on the other hand, a positive centering fixing device (20) permitting placing the ring (11) in a position coaxial to the support (1) in one operation, each one of the two said fixing devices (19, 20) securing the ring (11) separately to the support (1).

2. The extrusion equipment according to claim 1, characterized in that the said progressively adjustable device comprises a set of screws (19) fitted radially in tapped holes of the support (1) or of the ring (11) and pressing against a first cylindrical bearing surface of the ring or of the support (13), and in that positive centering fixing device comprises a cylindrical collar (20) which can be opened and closed, capable of pressing simultaneously against two second cylindrical bearing surfaces (14, 15) belonging to the die-base ring (11) and the support (1), respectively.

3. The extrusion equipment according to claim 2, characterized in that the cylindrical collar (20) has a cylindrical inside surface and in that the two second bearing surfaces (14, 15) have the same diameter, and are outside bearing surfaces.

4. The extrusion equipment according to claim 3, characterized in that the first bearing surface (13) has a diameter less than that of the second bearing surfaces (14, 15) and is engaged with the interior of a tubular prolongation (12) of the ring (11) or of the support (1), the prolongation (12) being provided with said threaded holes.

5. The extrusion equipment according to claim 1, characterized by means (16) for fixing the ring (11) in relation to the support (1), the means comprising a set of screws (16) disposed parallelly to said axes, and pressing together the two flat annular surfaces perpendicular to their axis, belonging to the die-base ring (11) and to the support (1), respectively.

6. The extrusion equipment according to claim 1, characterized in that the said assembly of dies (22) is made integral with the said ring (11; 30) by retaining means (24, 25, 27, 34) capable of retaining selectively any one of the die assemblies belonging to a set of assemblies (22; 31, 32) of different compositions.

7. The extrusion equipment according to claim 1, characterized in that it comprises at least two plastic material feed orifices (7, 35) permitting formation of a sheath having distinct zones formed of different materials, at least one orifice being arranged in the support (1) and at least one other beng arranged in the die-base ring (30).

## Patentansprüche

1. Strangpresseinrichtung zur fortlaufenden Bildung einer Kunststoffhülle auf einem Draht, welche einen Tragteil (1), einen Drahtführer (2), der im Tragteil (1) in einer Achse des Tragteils (1) befestigt ist, eine Spritzmundstückeinheit (22), welche zur Führung und Kalibrierung des Kunststoffes vorgesehen ist, und radial justierbare Zentriermittel (11, 19, 20) zur Einstellung der Spritzmundstückeinheit (22) bezüglich des Tragteils (1) enthält, dadurch gekennzeichnet, dass die Spritzmundstückeinheit (22) mit einem Spritzmundstück-Tragring (11) verbunden ist, welcher eine Achse des Spritzmundstückes definiert, und dass die genannten Zentriermittel einerseits eine Fixiereinrichtung (19) zur fortlaufenden Justierung enthalten, welche erlaubt, eine wünschbare Versetzung zwischen der Achse des Tragteils (1) und der Achse des Spritzmundstückes einzustellen, und andererseits eine Fixiereinrichtung (20) zur zwangsläufigen Zentrierung enthalten, welche erlaubt, den Tragring (11) in einer koaxialen Position zum Tragteil (1) zu bringen, wobei die beiden Fixiereinrichtungen (19, 20) den Tragring (11) unabhängig voneinander mit dem Tragteil (1) verbinden.

2. Strangpresseinrichtung nach Anspruch 1, dadurch gekennzeichnet, dass die genannte Einrichtung zur fortlaufenden Justierung einen Satz von Schrauben (19) enthält, welche radial in Innengewinde des Tragteils (1) oder des Tragrings (11) eingreifen und sich auf einen ersten zylindrischen Bereich des Tragrings oder des Tragteils (13) abstützen, und dass die Fixiereinrichtung zur zwangsläufigen Zentrierung einen zu öffnenden und zu schliessenden zylindrischen Ring (20) enthält, welcher sich gleichzeitig auf zwei zweiten zylindrischen Bereichen (14, 15) abstützt, welche dem Spritzmundstück-Tragring (11) beziehungsweise dem Tragring (1) zugehören.

3. Strangpresseinrichtung nach Anspruch 2, dadurch gekennzeichnet, dass der zylindrische Ring (20) eine zylindrische innere Oberfläche aufweist, und dass die beiden zweiten zylindrischen Bereiche (14, 15) denselben Durchmesser aufweisen und äussere Bereiche sind.

4. Strangpresseinrichtung nach Anspruch 3, dadurch gekennzeichnet, dass der erste Bereich (13) einen inneren Durchmesser aufweist, der kleiner ist als der der zweiten Bereiche (14, 15) und der sich ins Innere einer rohrförmigen Verlängerung (12) des Tragrings (11) oder des Tragteils (1) erstreckt, welche Verlängerung für die genannten Innengewinde vorgesehen ist.

5. Strangpresseinrichtung nach Anspruch 1, dadurch gekennzeichnet, dass Haltemittel (16) für den Tragring (11) in bezug auf den Tragteil (1) vorgesehen sind, welche Mittel einen Satz von Schrauben (16) enthalten, welche parallel zu den genannten Achsen angeordnet sind, und welche beiden ringförmigen, ebenen Oberflächen des Spritzmundstück-Tragrings (11) und des Tragteils (1), die rechtwinklig zu deren Achse stehen, gegeneinander presst.

6. Strangpresseinrichtung nach Anspruch 1, dadurch gekennzeichnet, dass die genannte Spritzmundstückeinheit (22) durch den genannten Tragring (11; 30) durch Haltemittel (24, 25, 27, 34) gehalten ist, welche fähig sind, beliebige Spritzmundstückeinheiten, welche Teil eines Satzes (22; 31, 32) unterschiedlicher Anordnungen sind, wahlweise zu halten.

7. Strangpresseinrichtung nach Anspruch 1, dadurch gekennzeichnet, dass mindestens zwei Einfüllöffnungen (7, 35) aus Kunststoffmaterial enthalten sind, welche ein Bilden einer Umhüllung ermöglichen, die unterschiedliche Zonen aus unterschiedlichem Material aufweist, wobei mindestens eine Einfüllöffnung im Tragteil (1) und mindestens eine andere im Spritzmundstück-Tragring (30) angeordnet ist.
